# EUROPÄISCHE PATENTSCHRIFT

(11) **EP 1 246 962 B1**
(45) Veröffentlichungstag und Bekanntmachung des Hinweises auf die Patenterteilung: **17.05.2006**
(21) Anmeldenummer: 00979668.1
(22) Anmeldetag: 06.12.2000
(51) Int. Cl.: D06F 37/30

(54) **ANTRIEBSVORRICHTUNG FÜR EINE WASCHMASCHINE**
DRIVE ARRANGEMENT FOR A WASHING MACHINE
DISPOSITIF D'ENTRAINEMENT DE MACHINE A LAVER

(30) Priorität: 29.12.1999 DE 19963703
(43) Veröffentlichungstag der Anmeldung: 09.10.2002
(73) Patentinhaber: BSH Bosch und Siemens Hausgeräte GmbH, 81739 München (DE)
(72) Erfinder: HEYDER, Reinhard, 13403 Berlin (DE); SKRIPPEK, Jörg, 14641 Priort (DE)
(86) Internationale Anmeldenummer: PCT/EP2000/012301
(87) Internationale Veröffentlichungsnummer: WO 2001/049919

(56) Entgegenhaltungen:
- EP-A- 0 413 915
- EP-A- 0 947 622
- DE-A- 19 726 246
- US-A- 4 446 706
- US-A- 5 996 379

## Beschreibung

Die Erfindung bezieht sich auf eine Antriebsvorrichtung für eine Waschmaschine mit einer Wäschetrommel, die durch einen auf einer Rückwand eines Laugenbehälters angeordneten, einen Läufer, ein Ständertragteil und Ständerpakete aufweisenden Motor angetrieben ist.

Eine derartige Antriebsvorrichtung für eine Waschmaschine ist aus der DE 199 37 229 A1 bekannt. Dort ist eine Antriebsvorrichtung für eine Waschmaschine mit einer fliegend gelagerten Wäschetrommel beschrieben, die wenigstens annähernd horizontal gelagert ist und über eine Antriebswelle angetrieben wird, die auch den Läufer eines Elektromotors trägt, wobei der Ständer des Motors, bestehend aus einem Ständertragteil und Ständerpaketen, die ihrerseits Blechpakete und Wicklungen aufweisen, an der Rückseite des Laugenbehälters befestigt ist. Gemäß einer in der DE 199 37 229 A1 beschriebenen Ausführungsform dieser Antriebsvorrichtung ist ein Tragkörper des Ständertragteils oder das Ständertragteil als ganzes aus Kunststoff hergestellt. Auch der Laugenbehälter kann als ganzer aus Kunststoff bestehen. Wenn diese Maßnahmen getroffen werden, wird das Fließen von Ableitströmen wirksam verhindert, wie sie aufgrund kapazitiver Effekte bei einem Elektromotor mit Stromrichterantrieb oder einem elektronisch kommutierten Gleichstrommotor, d. h. einem frequenzumgerichteten Elektromotor, bei hohen Umrichtfrequenzen, beispielsweise bei 16 bis 20 kHz entstehen können.

Der für einen Gleichstrom nicht durchlässige von Luft ausgefüllte Bereich zwischen dem Läufer und den Ständerpaketen des Elektromotors wird nämlich für einen hochfrequenten Wechselstrom dieser Frequenz elektrisch leitend. Dieser, auch als Ableitstrom bezeichnete Strom fließt dann über elektrisch leitende Teile der Waschmaschine entweder direkt über das Ständertragteil über den Laugenbehälter oder indirekt über den Läufer und dessen Welle und dann über den Laugenbehälter, sofern dieser aus Metall besteht, zu dem Schutzerde-Kontakt ab. Zwar ist es möglich, durch den Einsatz eines Ständertragteils aus Kunststoff derartige Ableitströme zu unterdrücken, jedoch ist es verhältnismäßig aufwendig, derartige Kunststoff-Ständertragteile einzusetzen, weil sie keine hohe Formstabilität haben.

Bei einer aus US 4 446 706 bekannten Waschmaschine liegt ein vollständig durch isolierenden Kunststoff gekapselter Direktantriebs-Motor innerhalb des Nassraums eines Laugenbehälters und wird dadurch vor dem Eindringen von Waschflüssigkeit geschützt. Maßnahmen zum Verhindern des Fließens von Ableitströmen sind bei der üblichen dreiphasigen Antriebsfrequenz nicht erforderlich und auch nicht getroffen.

Es ist die Aufgabe der Erfindung, eine Antriebsvorrichtung der eingangs genannten Art derart zu verbessern, dass das Fließen von Ableitströmen mit einfachen Mitteln unterdrückt wird.

Erfindungsgemäß wird diese Aufgabe dadurch gelöst, dass stromführende Teile des Motors mit einer elektrischen Isolation bedeckt sind, so dass das Ständertragteil gegen die Rückwand des Laugenbehälters elektrisch getrennt ist.

Vorteilhafte Weiterbildungen ergeben sich aus den Unteransprüchen.

Vorteilhaft lässt sich die elektrische Trennung des Motors von dem Laugenbehälter durch eine Isolationsschicht auf der Rückwand des Laugenbehälters realisieren.

Besonders vorteilhaft lassen sich als elektrisch isolierende Medien Kunststoff oder Hartpapier einsetzen. Auch eine wärmeleitende Folie, die gleichzeitig aus einem elektrisch isolierenden Material besteht, lässt sich mit Vorteil einsetzen. Dabei wird eine dünne Schicht aus Hartpapier oder Kunststoff zwischen den Blechpaketen auf der einen Seite und dem Ständertragteil auf der anderen Seite eingebracht.

Gemäß einer vorteilhaften Weiterbildung ist das Tragteil des Motors durch eine Isolationsschicht von der Rückwand des Laugenbehälters elektrisch getrennt. Zusätzlich lässt sich auch eine Isolationsschicht vorsehen, die das Tragteil von der Antriebswelle trennt.

Vorteilhaft ist es auch, wenn das Tragteil als Ganzes von einer Isolationsschicht umgeben ist. Die Isolationsschicht entsteht dabei beispielsweise durch Umspritzen des Tragteils.

Gemäß einer vorteilhaften Weiterbildung der Erfindung sind die Ständerpakete durch eine Isolationsschicht von dem Tragteil getrennt.

Vorteilhaft werden die Blechpakete ganze als von Kunststoff umspritzt. Sofern sie mit einer Schraube aus Metal mit dem Ständertragteil verbunden sind, ist auch an der Wandung der jeweils die Schraube in dem Blechpaket aufnehmenden Bohrung eine elektrisch isolierende Schicht vorzusehen. Diese muß ebenso auch den Bereich übergreifen, der von einer auf die Schraube aufgeschraubte Mutter bedeckt wird.

Eine weitere Maßnahme zur elektrischen Trennung besteht darin, den Abstand des Wickelkopfes, d. h. der das Blechpaket umgebenden Wicklungen, zu metallischen Teilen zu vergrößern, so daß dieser vorzugsweise größer als 0,5 cm ist.

Vorteilhaft ist es ebenso, wenn der Läufer des Elektromotors wenigstens teilweise aus einem elektrisch isolierenden Material besteht, um hochfrequente Ableitströme zu unterbinden. Vorzugsweise ist der Läufer entweder ganz oder wenigstens teilweise aus Kunststoff ausgeführt. Hinter in dem Läufer angeordneten Permanentmagneten sind Weicheisenplatten angeordnet, die als magnetischer Rückschluß dienen. Diese sind vorzugsweise auch in das Kunststoffteil eingeschlossen oder eingespritzt, wenn der Läufer aus Kunststoff besteht. Alternativ sind die Weicheisenplatten mit der Läuferglocke verklebt.

Falls die Läuferglocke aus Kunststoff besteht, ist in der Läuferglocke ein Verbindungselement zu der Welle, auf deren Ende die Läuferglocke aufgebracht ist, ein metallisches Teil. z. B. mit einer Kerbverzahnung oder einem Kegel, verdrehsicher in den Kunststoff eingespritzt.

Vorzugsweise ist die Kunststoffglocke so ausgebildet, daß zu Teilen, die elektrische Verbindungen oder Kontakte in ihrer Lage halten, ein Abstand von mehr als 3 mm besteht. Die Läuferglocke hat, sofern sie aus Kunststoff besteht, vorzugsweise abgerundete Kanten, um eine höhere Flammfestigkeit zu erreichen. Sofern die Läuferglocke Rippen aufweist, sind diese vorzugsweise auf der Innenseite, d. h. auf der den Ständerpaketen zugewandten Seite, angeordnet. Die Rippen dienen gleichzeitig zur Kühlung der Wicklung. Zur Kühlung können auch Öffnungen oder Durchbrüche in dem Läufer dienen. Der Läufer kann auch speichenförmig aufgebaut sein.

Der Einsatz einer Kunststoffglocke hat den Vorteil, daß bei seiner Herstellung im Vergleich zu einer Glocke aus Metall geringere Herstellungskosten entstehen und daß sich die Kunststoffglocke leichter geräuschoptimiert ausbilden läßt.

Die Erfindung eignet sich sowohl für einen direkt die Wäschetrommel antreibenden Elektromotor als auch für einen solchen Elektromotor, der die Welle der Wäschetrommel über ein Getriebe oder einen Keilriemen antreibt, sofern dieser Elektromotor ebenfalls an der Bodenwand des Laugenbehälters angeordnet ist, wie beispielsweise aus der DE 199 11 139 A1 bekannt ist.

Um das Fließen von Ableitströmen zu unterdrücken, ist zusätzlich in einer vorteilhaften Ausbildung der Erfindung auch vorgesehen, jeweils zwischen dem Wickelkopf einer Erregerwicklung und dem Blechpaket eine zusätzliche Isolierschicht zu der bereits vorhandenen Nutisolierung vorzusehen. Diese kann vorzugsweise einstückig mit der zwischen dem Blechpaket und der Mutter angeordneten lsolierplatte ausgebildet sein.

Nachstehend wird die Erfindung in Ausführungsbeispielen anhand der Zeichnungen näher erläutert: Es zeigen:
- Fig. 1: eine Antriebsvorrichtung für eine Waschmaschine im Querschnitt,
- Fig. 2a: ein an einem Ständertragteil befestigtes Ständerpaket mit einer erfindungsgemäß vorgesehenen Isolationsschicht in einer ersten Ausführungsform und
- Fig. 2b: das an dem Ständertragteil befestigte Ständerpaket in einer zweiten Ausführungsform.

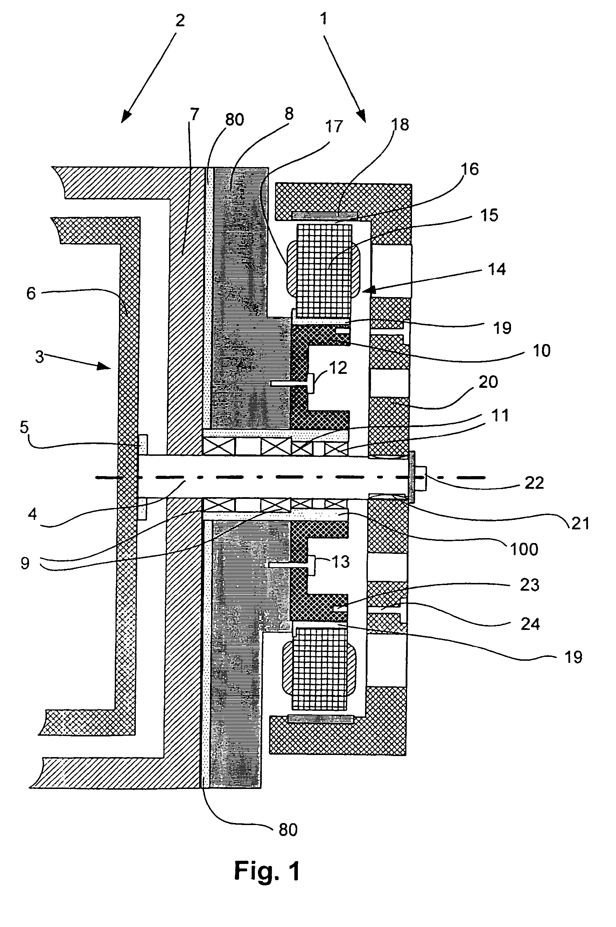

Eine Antriebsvorrichtung 1 (Fig. 1) ist auf der Rückseite eines Laugenbehälters 2 in einer Waschmaschine angeordnet. Im Innern des Laugenbehälters 2 ist eine Wäschetrommel 3 über eine Welle 4 horizontal liegend gelagert. Über einen Befestigungsring 5 ist die Wäschetrommel 3, d. h. eine Bodenwand 6 der Wäschetrommel 3 mit der Welle 4 fest verbunden. Anstelle der hier dargestellten horizontalen Lagerung ist es auch möglich, die Wäschetrommel 3 unter einem Neigungswinkel von beispielsweise 15° gegenüber der Horizontalen zu lagern. Ebenso läßt sich die Wäschetrommel 3 senkrecht stehend auf der Welle 4 anordnen, so daß die Antriebsvorrichtung 1 unterhalb des Laugenbehälters 2 angeordnet ist.

Auf der Rückseite einer Rückwand 7 des Laugenbehälters 2 ist ein Ständertragteil 8 befestigt. Das Ständertragteil 8 dient zur Aufnahme der Antriebsvorrichtung 1. Das Tragteil 8 ist beispielsweise auch als Tragstern ausgebildet und ist mit dem Laugenbehälter 2 verbunden.

Innerhalb des Tragteils 8 ist die Welle 4 über Lager 9 drehbar gelagert. Zur Abdichtung zwischen der Rückwand 7 und der Welle 4 dient ein (hier nicht dargestellter) Dichtring.

Das Ständertragteil 8 weist ein fest mit ihm verbundenes Tragelement 10 auf, das von außen über die Welle 4 aufschiebbar ist und seinerseits über Lager 11 gegenüber der Welle 4 gelagert ist. Es ist über Befestigungsschrauben 12, 13 mit dem Ständertragteil 8 fest verbunden. Das Tragelement 10 besteht wie das Ständertragteil 8 und der Laugenbehälter 2 aus Metall und ist daher elektrisch leitfähig. Ständerpakete 14 sind mit dem Tragelement 10 und weisen von Erregerwicklungen 17 umgebene Blechpakete 15 auf. Da die in den Erregerwicklungen 17 fließenden Ströme hochfrequent sind, fließen zwischen den Erregerwicklungen 17 und den Blechpaketen 15 unter Überbrückung der den Wicklungsdraht umgebenden isolierenden Hülle kapazitive Ableitströme ab, die über das Tragelement 10, das Ständertragteil 8 sowie über den Laugenbehälter 2 zu dem Gehäuse der Waschmaschine fließen könnten und eine Gefahr für die Bedienungsperson darstellen würden. Daher sind zur elektrischen Trennung des Ständertragteils 8 und des Tragelements 10 von der Rückwand 7 eine Isolationsschicht 80 und zur elektrischen Trennung von der Welle 4 eine Isolationsschicht 100 vorgesehen.

Zusätzlich ist zur Unterdrückung der Ableitströme eine Isolationsschicht 36 vorgesehen, die zwischen den Blechpaketen 15 und dem Tragelement 10 einerseits sowie zwischen den Blechpaketen 15 und dem Ständertragteil 8 andererseits angeordnet ist. In jedem Fall ist ein isolierendes Material zwischen dem Bauelement, das die Ständerpakete 14 trägt, und letzterem vorzusehen. Dadurch wird ein Fließen der Ableitströme wirksam verhindert.

Magnetisierbare Pole 18 sind, über einen Luftspalt 16 von den Ständerpaketen beabstandet, auf einer Läuferglocke 20 angeordnet. Diese ist über eine Kerbverzahnung 21 mit der Welle 4 verbunden, zusätzlich ist sie über eine zentrische Wellenschraube 22, die in eine entsprechende Gewindebohrung der Welle 4 hineinragt, mit dieser verbunden. Mittels Gewindebohrungen 23, 24 in dem Tragelement 10 bzw. in der Läuferglocke 20 lassen sich das Tragelement 10 und die Läuferglocke 20 während des Transports durch Arretierschrauben fest miteinander verbinden.

Anstelle der Kerbverzahnung 21 kann auch eine Profilwellen-, Profilnaben-, Paßfeder-, Kegel- oder Keilnutverbindung zur festen Verbindung zwischen der Läuferglocke 20 und der Welle 4 vorgesehen sein. Die Läuferglocke 20 besteht vorzugsweise ebenfalls aus Kunststoff, um das Fließen von Ableitströmen aufgrund eines kapazitiven Effekts zwischen den Blechpaketen 15 und den magnetischen Polen 18 zu verhindern.

Anstelle des Ständertragteils 8 und des Tragelements 10 läßt sich vorteilhaft ein einziges zusammenhängendes und aus einem einzigen Material bestehendes Tragteil einsetzen, um auf diesem die Ständerpakete 25 zu befestigen.

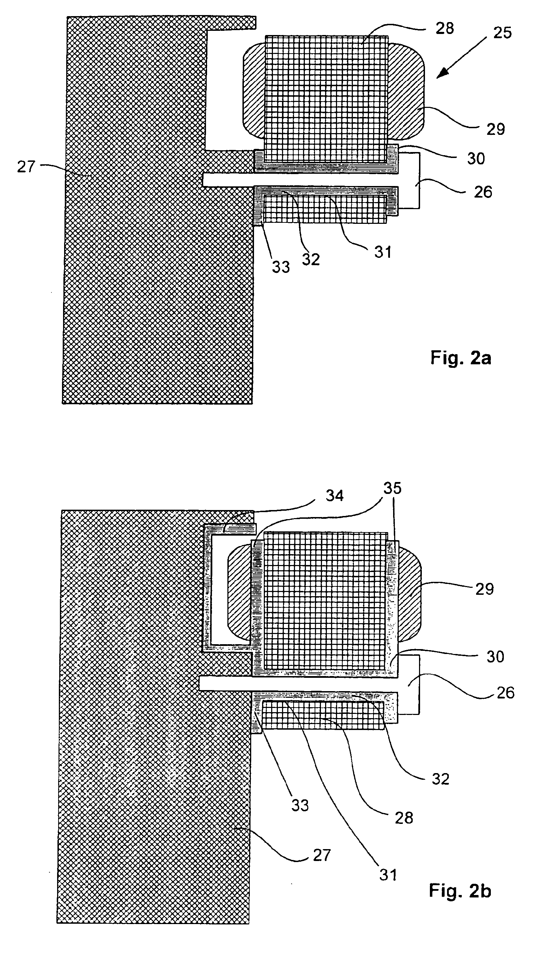

In einem weiteren Ausführungsbeispiel (Fig. 2a) ist ein Ständerpaket 25 über eine Schraube 26 mit einem Ständertragteil 27 fest verbunden. Das Ständerpaket 25 weist ein Blechpaket 28 und Erregerwicklungen 29 auf. Durch eine gesonderte Isolationsschicht 30 sind die Erregerwicklungen 29 zusätzlich zu den bereits vorhandenen isolierenden Umhüllungen des die Erregerwicklungen 29 bildenden Drahtes elektrisch von dem Blechpaket 28 getrennt. Dadurch verringert sich der kapazitive Effekt von hochfrequenten Strömen. Auch in einer Bohrung 31 innerhalb des Blechpakets 28, die zur Aufnahme der Befestigungsschraube 26 dient, ist eine Isolationsschicht 32 angeordnet, die das Fließen von Ableitströmen von dem Ständerpaket 25 zu dem Ständertragteil 27 verhindert. Auf der dem Ständertragteil 27 zugewandten Seite des Blechpakets 28 ist eine Isolationsschicht 33 vorhanden.

In einem weiteren Ausführungsbeispiel (Fig. 2b) ist zusätzlich zu den bereits in Fig. 2a dargestellten Isoliermaßnahmen eine weitere Isolationsschicht 34 angeordnet, die das Ständertragteil 27 gegen Ableitströme gegenüber dem Ständerpaket 25 elektrisch isoliert. Zusätzlich läßt sich vorsehen, wie in Fig. 2b dargestellt, daß eine Isolationsschicht 35 auch in dem Bereich zwischen dem Blechpaket 28 und der Erregerwicklung 29 angeordnet ist, um eine noch bessere elektrische Isolation gegen kapazitive Effekte zu erzielen.

Alle oben beschriebenen Maßnahmen lassen sich jeweils einzeln oder in Verbindung miteinander treffen, um Ableitströme zu unterdrücken. Dadurch ist es nicht notwendig, das Ständertragteil 8, das Tragelement 10 oder das Ständertragteil 27 als ganze aus Kunststoff auszubilden.

## Patentansprüche

1. Antriebsvorrichtung (1) in einer Waschmaschine mit einer Wäschetrommel (6), die durch einen auf einer Rückwand (7) eines Laugenbehälters (2) angeordneten, einen Läufer (20), ein Ständertragteil (8, 10, 27) und Ständerpakete (14, 25) aufweisenden Motor angetrieben ist, **dadurch gekennzeichnet, dass** stromführende Teile des Motors mit einer elektrischen Isolation (19, 30, 32, 33, 34, 35, 80, 100) bedeckt sind, so dass das Ständertragteil (8, 10, 27) gegen die Rückwand (7) des Laugenbehälters (2) elektrisch getrennt ist.

2. Antriebsvorrichtung nach Anspruch 1, **dadurch gekennzeichnet, dass** das Ständertragteil (8, 10) durch die Isolationsschicht (80, 100) von der Rückwand (7) und einer die Wäschetrommel (6) antreibenden Welle (4) und die Welle (8) umgebenden Lagern (9, 11) getrennt ist.

3. Antriebsvorrichtung nach Anspruch 1, **dadurch gekennzeichnet, dass** die Isolationsschicht (80, 100) das Ständertragteil (8, 10) als Ganzes umgibt.

4. Antriebsvorrichtung nach einem der Ansprüche 1 bis 3, **dadurch gekennzeichnet, dass** die Ständerpakete (14, 25) durch die Isolationsschicht (19, 30, 32, 33, 35) von dem Ständertragteil (8, 10, 27) elektrisch getrennt sind.

5. Antriebsvorrichtung nach Anspruch 4, **dadurch gekennzeichnet, dass** die Isolationsschicht (19) zwischen den Ständerpaketen (14) und einem Tragelement (10) sowie einem Ständertragteil (8) angeordnet ist, die gemeinsam ein Tragteil bilden.

6. Antriebsvorrichtung nach Anspruch 4 oder 5, **dadurch gekennzeichnet, dass** die Ständerpakete (25) mittels Schrauben (26) auf dem Tragteil (27) befestigt sind und dass jeweils die Wandung (31) einer Bohrung zur Aufnahme der Schraube (26) durch die Isolationsschicht (32) gegenüber dem Ständerpaket (25) isoliert ist.

7. Antriebsvorrichtung nach einem der Ansprüche 4 bis 6, **dadurch gekennzeichnet, dass** das Tragteil (27) an einer Außenwand, die Erregerwicklungen (29) der Ständerpakete (25) gegenüberliegt, die Isolationsschicht (34) aufweist.

8. Antriebsvorrichtung nach einem der Ansprüche 4 bis 7, **dadurch gekennzeichnet, dass** an den Ständerpaketen (25) zwischen Blechpaketen (28) und Erregerwicklungen (29) die Isolationsschicht (35) als Ergänzung zu einer Nutisolationsschicht vorgesehen ist.

9. Antriebsvorrichtung nach Anspruch 9, **dadurch gekennzeichnet, dass** die lsolationsschicht (35) die Blechpakete (28) jeweils als Ganzes umgibt.

10. Antriebsvorrichtung nach einem der Ansprüche 1 bis 8, **dadurch gekennzeichnet, dass** die Isolationsschicht (19, 30, 32, 33, 34, 35, 80, 100) aus Kunststoff oder Hartpapier oder aus einer wärmeleitenden elektrisch isolierenden Folie besteht.

11. Antriebsvorrichtung nach einem der Ansprüche 1 bis 10, **dadurch gekennzeichnet, dass** der Läufer (20) des Motors wenigstens teilweise aus einem elektrisch isolierenden Material besteht, um hochfrequente Ableitströme zu unterbinden.

12. Antriebsvorrichtung nach Anspruch 11, **dadurch gekennzeichnet, dass** der Läufer (20) ganz oder wenigstens teilweise aus Kunststoff ausgeführt ist.

13. Antriebsvorrichtung nach Anspruch 11 oder 12, **dadurch gekennzeichnet, dass** hinter in dem Läufer (20) angeordneten Permanentmagneten Weicheisenplatten angeordnet sind, die als magnetischer Rückschluss dienen.

14. Antriebsvorrichtung nach Anspruch 13, **dadurch gekennzeichnet, dass** die Weicheisenplatten in das Kunststoffteil eingeschlossen oder eingespritzt sind.

15. Antriebsvorrichtung nach Anspruch 13, **dadurch gekennzeichnet, dass** die Weicheisenplatten mit dem Läufer (20) verklebt sind.

16. Antriebsvorrichtung nach einem der Ansprüche 11 bis 15, **dadurch gekennzeichnet, dass** an dem Läufer (20) ein metallisches Verbindungselement zu der Welle angebracht ist, auf deren Ende der Läufer (20) befestigt ist.

17. Antriebsvorrichtung nach Anspruch 16, **dadurch gekennzeichnet, dass** das Verbindungselement verdrehsicher in den Kunststoff eingespritzt ist.

18. Antriebsvorrichtung nach Anspruch 17, **dadurch gekennzeichnet, dass** das Verbindungselement mit einer Kerbverzahnung ausgestattet ist.

19. Antriebsvorrichtung nach einem der Ansprüche 11 bis 18, **dadurch gekennzeichnet, dass** der Läufer (20) zu Teilen, die elektrische Verbindungen oder Kontakte in ihrer Lage halten, einen Abstand von mehr als 3 mm aufweist.

20. Antriebsvorrichtung nach einem der Ansprüche 11 bis 19, **dadurch gekennzeichnet, dass** der Läufer (20) abgerundete Kanten hat.

21. Antriebsvorrichtung nach einem der Ansprüche 11 bis 20, **dadurch gekennzeichnet, dass** der Läufer (20) Rippen aufweist.

22. Antriebsvorrichtung nach Anspruch 21, **dadurch gekennzeichnet, dass** die Rippen auf der den Ständerpaketen zugewandten Seite angeordnet sind.

23. Antriebsvorrichtung nach einem der Ansprüche 1 bis 22, **dadurch gekennzeichnet, dass** Öffnungen oder Durchbrüche in dem Läufer (20) angeordnet sind.

24. Antriebsvorrichtung nach einem der Ansprüche 1 bis 23, **dadurch gekennzeichnet, dass** der Läufer (20) speichenförmig aufgebaut ist.

25. Antriebsvorrichtung nach einem der Ansprüche 1 bis 24, **dadurch gekennzeichnet, dass** der Läufer (20) als Läuferglocke ausgebildet ist.

## Claims

1. Drive device (1) in a washing machine with a laundry drum (6), which is driven by a motor arranged on a back wall (7) of a solution container (2) and comprising a rotor (20), a stator carrier part (8, 10, 27) and stator core stacks (14, 25), **characterised in that** current-conducting parts of the motor are covered by an electrical insulation (19, 30, 32, 33, 34, 35, 80, 100) so that the stator carrier part (8, 10, 27) is electrically isolated relative to the back wall (7) of the solution container (2).

2. Drive device according to claim 1, **characterised in that** the stator carrier part (8, 10) is isolated by the insulation layer (80, 100) from the back wall (7) and a shaft (4), which drives the laundry drum (6), and bearings (9, 11) surrounding the shaft (8).

3. Drive device according to claim 1, **characterised in that** the insulation layer (80, 100) surrounds the stator carrier part (8, 10) in its entirety.

4. Drive device according to one of claims 1 to 3, **characterised in that** the stator core stacks (14, 25) are electrically isolated from the stator carrier part (8, 10, 27) by the insulation layer (19, 30, 32, 33, 35).

5. Drive device according to claim 4, **characterised in that** the insulation layer (19) is arranged between the stator core stacks (14) and a carrier element (10) as well as a stator carrier part (8), which in common form a carrier part.

6. Drive device according to claim 4 or 5, **characterised in that** the stator core stacks (25) are fastened by means of screws (26) on the carrier part (27) and that in each instance the wall (31) of a bore for reception of the screw (26) is isolated by the insulation layer (32) relative to the stator lamination stack (25).

7. Drive device according to one of claims 4 to 6, **characterised in that** the carrier part (27) has the insulation layer (34) at an outer wall disposed opposite excitation windings (29) of the stator core stacks (25).

8. Drive device according to one of claims 4 to 7, **characterised in that** the insulation layer (35) is provided at the stator core stacks (25), between lamination stacks (28) and excitation windings (29), as a supplement to a groove insulation layer.

9. Drive device according to claim 8, **characterised in that** the insulation layer (35) surrounds the lamination stacks (28) in each instance in its entirety.

10. Drive device according to one of claims 1 to 8, **characterised in that** the insulation layer (19, 30, 32, 33, 34, 35, 80, 100) consists of plastics material or hard paper or of a thermally conductive, electrically insulating foil.

11. Drive device according to one of claims 1 to 10, **characterised in that** the rotor (20) of the motor consists at least partly of an electrically insulating material in order to suppress high-frequency shunt currents.

12. Drive device according to claim 11, **characterised in that** the rotor (20) is constructed wholly or at least partly of plastics material.

13. Drive device according to claim 11 or 12, **characterised in that** soft iron plates are arranged behind permanent magnets, which are arranged in the rotor (20), and serve as a magnetic short-circuit.

14. Drive device according to claim 13, **characterised in that** the soft iron plates are incorporated in or injection-moulded around by the plastics material part.

15. Drive device according to claim 13, **characterised in that** the soft iron plates are glued to the rotor (20).

16. Drive device according to one of claims 11 to 15, **characterised in that** a metallic connecting element for the shaft is mounted on the rotor (20), the rotor (20) being fastened on the end of the shaft.

17. Drive device according to claim 16, **characterised in that** the connecting element is injection-moulded around by the plastics material to be secure against turning.

18. Drive device according to claim 17, **characterised in that** the connecting element is furnished with a notch toothing.

19. Drive device according to one of claims 11 to 18, **characterised in that** the rotor (20) has a spacing of more than 3 millimetres from parts keeping the electrical connections or contacts in their position.

20. Drive device according to one of claims 11 to 19, **characterised in that** the rotor (20) has radiused edges.

21. Drive device according to one of claims 11 to 20, **characterised in that** the rotor (20) has ribs.

22. Drive device according to claim 21, **characterised in that** the ribs are arranged on the side facing the stator core stacks.

23. Drive device according to one of claims 1 to 22, **characterised in that** openings or passages are arranged in the rotor (20).

24. Drive device according to one of claims 1 to 23, **characterised in that** the rotor (20) is of spoke-shaped construction.

25. Drive device according to one of claims 1 to 24, **characterised in that** the rotor (20) is constructed as a rotor bell.

## Revendications

1. Dispositif d'entraînement (1) dans une machine à laver comprenant un tambour à linge (6) qui est entraîné par un moteur placé sur une paroi arrière (7) d'un réservoir à lessive (2) et présentant un rotor (20), une pièce porteuse de stator (8, 10, 27) et des empilages statoriques (14, 25), **caractérisé en ce que** des pièces du moteur conductrices de courant sont recouvertes par une isolation électrique (19, 30, 32, 33, 34, 35, 80, 100) de sorte que la pièce porteuse de stator (8, 10, 27) est séparée électriquement de la paroi arrière (7) du réservoir à lessive (2).

2. Dispositif d'entraînement selon la revendication 1, **caractérisé en ce que** la pièce porteuse de stator (8, 10) est séparée de la paroi arrière (7) et d'un arbre (4) entraînant le tambour à linge (6) et de paliers (9, 11) entourant l'arbre (8) au moyen de la couche d'isolation (80, 100).

3. Dispositif d'entraînement selon la revendication 1, **caractérisé en ce que** la couche d'isolation (80, 100) entoure entièrement la pièce porteuse de stator (8, 10).

4. Dispositif d'entraînement selon l'une quelconque des revendications 1 à 3, **caractérisé en ce que** les empilages statoriques (14, 25) sont séparés électriquement de la pièce porteuse de stator (8, 10, 27) au moyen de la couche d'isolation (19, 30, 32, 33, 35).

5. Dispositif d'entraînement selon la revendication 4, **caractérisé en ce que** la couche d'isolation (19) est placée entre les empilages statoriques (14) et un élément porteur (10) ainsi qu'une pièce porteuse de stator (8), qui forment ensemble une pièce porteuse.

6. Dispositif d'entraînement selon la revendication 4 ou 5, **caractérisé en ce que** les empilages statoriques (25) sont fixés sur la pièce porteuse (27) au moyen de vis (26) et **en ce que** respectivement la paroi (31) d'un alésage de logement de la vis (26) est isolée par rapport à l'empilage statorique (25) au moyen de la couche d'isolation (32).

7. Dispositif d'entraînement selon l'une quelconque des revendications 4 à 6, **caractérisé en ce que** la pièce porteuse (27) sur une paroi extérieure est située à l'opposé d'enroulements excitateurs (29) des empilages statoriques (25), qui présente la couche d'isolation (34).

8. Dispositif d'entraînement selon l'une quelconque des revendications 4 à 7, **caractérisé en ce que** la couche d'isolation (35) est prévue sur les empilages statoriques (25), entre des empilages de tôles (28) et des enroulements excitateurs (29), en tant que complément à une couche d'isolation à rainure.

9. Dispositif d'entraînement selon la revendication 9, **caractérisé en ce que** la couche d'isolation (35) entoure entièrement les empilages de tôles (28).

10. Dispositif d'entraînement selon l'une quelconque des revendications 1 à 8, **caractérisé en ce que** la couche d'isolation (19, 30, 32, 33, 34, 35, 80, 100) est constituée de matière plastique ou de papier dur ou d'une feuille conductrice de chaleur, isolant électriquement.

11. Dispositif d'entraînement selon l'une quelconque des revendications 1 à 10, **caractérisé en ce que** le rotor (20) du moteur est constitué au moins en partie d'un matériau isolant électriquement afin d'empêcher des courants de fuite à haute fréquence.

12. Dispositif d'entraînement selon la revendication 11, **caractérisé en ce que** le rotor (20) est exécuté entièrement ou au moins en partie en matière plastique.

13. Dispositif d'entraînement selon la revendication 11 ou 12, **caractérisé en ce que** des plaques en fer doux sont placées derrière des aimants permanents disposés dans le rotor (20), ces plaques en fer doux servant de reflux magnétique.

14. Dispositif d'entraînement selon la revendication 13, **caractérisé en ce que** les plaques en fer doux sont incluses ou moulées dans la pièce en plastique.

15. Dispositif d'entraînement selon la revendication 13, **caractérisé en ce que** les plaques en fer doux sont collées au rotor (20).

16. Dispositif d'entraînement selon l'une quelconque des revendications 11 à 15, **caractérisé en ce qu'**un élément métallique de raccordement à l'arbre est placé sur le rotor (20), sur l'extrémité duquel arbre est fixé le rotor (20).

17. Dispositif d'entraînement selon la revendication 16, **caractérisé en ce que** l'élément de raccordement est moulé dans la matière plastique de manière résistante à la torsion.

18. Dispositif d'entraînement selon la revendication 17, **caractérisé en ce que** l'élément de raccordement est pourvu d'un crantage.

19. Dispositif d'entraînement selon l'une quelconque des revendications 11 à 18, **caractérisé en ce que** le rotor (20) présente un écart de plus de 3 mm par rapport à des pièces qui maintiennent des liaisons électriques ou des contacts dans leur position.

20. Dispositif d'entraînement selon l'une quelconque des revendications 11 à 19, **caractérisé en ce que** le rotor (20) a des bords arrondis.

21. Dispositif d'entraînement selon l'une quelconque des revendications 11 à 20, **caractérisé en ce que** le rotor (20) présente des nervures.

22. Dispositif d'entraînement selon la revendication 21, **caractérisé en ce que** les nervures sont placées sur le côté tourné vers les empilages statoriques.

23. Dispositif d'entraînement selon l'une quelconque des revendications 1 à 22, **caractérisé en ce que** des ouvertures ou des passages sont placés dans le rotor (20).

24. Dispositif d'entraînement selon l'une quelconque des revendications 1 à 23, **caractérisé en ce que** le rotor (20) est construit en forme de rayons.

25. Dispositif d'entraînement selon l'une quelconque des revendications 1 à 24, **caractérisé en ce que** le rotor (20) est construit comme cloche de rotor.
